# EUROPÄISCHE PATENTANMELDUNG

(11) **EP 0 581 072 A1**
(43) Veröffentlichungstag der Anmeldung: **02.02.1994**
(21) Anmeldenummer: 93110872.4
(22) Anmeldetag: 07.07.1993
(51) Int. Cl.: B64D 9/00, B64D 11/06

(54) **Kombination einer Flugzeug-Sitzschiene und einer daran angepassten Befestigungseinrichtung**

(30) Priorität: 27.07.1992 DE 4224821
(71) Anmelder: Telair International Cargo Systems GmbH, D-83734 Hausham (DE)
(72) Erfinder: Sundseth, Jarl, D-83727 Schliersee (DE)
(74) Vertreter: Bohnenberger, Johannes, Dr.

(57) **Zusammenfassung**

Bekannt ist eine Befestigungseinrichtung zum lösbaren Befestigen eines Gegenstands (7) in einer Flugzeug-Sitzschiene (1) mit C-Profil, in welcher eine Vielzahl von Bohrungen (2) durch Schlitze (3) miteinander verbunden und regelmäßig beabstandet voneinander vorgesehen ist, umfassend Halteeinrichtungen, die in einem Innenraum der Sitzschiene (1) festsetzbar und mit dem Gegenstand (7) verbindbar sind. Zur Vereinfachung der Montage wird vorgeschlagen, daß die Halteeinrichtungen mindestens zwei zueinander im wesentlichen spiegelsymmetrisch ausgebildete Halteteile (10, 10') mit jeweils mindestens einem hakenförmigen Fußabschnitt (14, 14'; 15, 15'; 16, 16') umfassen, die in die Bohrungen (2) der Sitzschiene (1) einsetzbar und beim Verschieben in einander entgegengesetzten Richtungen längs der Sitzschiene (1) in dieser einhakbar sind, und daß die Halteteile (10, 10') Schraubeinrichtungen (8, 20) umfassen, über welche sie mit dem Gegenstand (7) in einem festgelegten Abstand voneinander verbindbar sind.

## Beschreibung

Die Erfindung betrifft eine Befestigungseinrichtung zum lösbaren Befestigen eines Gegenstandes in einer Flugzeug-Sitzschiene nach dem Oberbegriff des Patentanspruches 1.

Beim Umrüsten des Hauptdecks eines Passagierflugzeuges auf Cargo müssen die dann notwendigen Riegelelemente und Förderrollen zum Halten bzw. Fördern von Containern in den Schienen für die Passagiersitze verankert werden. Nachdem Flugzeuge oftmals tagsüber als Passagierflugzeuge und nachts als Cargo-Maschinen eingesetzt werden und eine Vielzahl derartiger Riegelelemente, Rollen u.a. Gegenstände an- und abzumontieren sind, muß die Montage möglichst einfach und zeitsparend sein. Andererseits aber muß eine sehr feste Verbindung sichergestellt werden (erheblich fester als bei einem Passagiersitz), da die festzuhaltenden Lasten sehr hoch sein können. Auch das Gewicht der Befestigungseinrichtung darf - nachdem es "totes Gewicht" ist - nicht allzu hoch sein.

Bisher werden als Halteeinrichtungen eine Art von Hammerkopfschrauben verwendet. Wenn man z.B. ein Riegelelement an vier Stellen befestigen will, so müssen vier solche Schrauben eingesetzt, das Riegelelement auf die Schrauben aufgesetzt und schließlich Muttern auf die Gewindeabschnitte der Hammerschrauben aufgesetzt und festgezogen werden. Dieser Vorgang ist diffizil und zeitraubend.

Der Erfindung liegt die Aufgabe zugrunde, eine Befestigungseinrichtung der eingangs genannten Art dahingehend weiterzubilden, daß eine vereinfachte Montage bei hoher Festigkeit erzielbar ist.

Diese Aufgabe wird in überraschend einfacher Weise durch die im Kennzeichen des Patentanspruches 1 angegebenen Merkmale gelöst.

Dadurch, daß hakenförmige Fußabschnitte vorgesehen sind, welche in einander entgegengesetzten Richtungen ragen und in einander entgegengesetzten Richtungen in die Sitzschienen eingehakt werden können, diese Fußabschnitte bzw. die dazugehörigen Halteeinrichtungen andererseits durch den zu befestigenden Gegenstand selbst nach dem Einhaken in festem Abstand zueinander gehalten werden, ist in einfachster Weise, nämlich durch den Einhakvorgang selbst, bereits ein absolut zuverlässiger Halt gewährleistet. Es kommt in diesem Fall gar nicht mehr darauf an, ob man Schraubbolzen mit dem korrekten Drehmoment anzieht oder nicht, da die Verbindung zwischen den Halteeinrichtungen und den Sitzschienen formschlüssig erfolgt.

Vorzugsweise verbindet man eines der beiden Halteteile mit dem zu befestigenden Gegenstand fest (bzw. löst die Verbindung bei der Demontage nicht), während man das andere Halteteil zur Demontage ganz vom zu befestigenden Gegenstand löst, dann den Gegenstand verschiebt und abhebt und schließlich das noch in der Sitzschiene eingehakte Halteteil herausnimmt. Die Montage erfolgt in umgekehrter Reihenfolge. Zuerst hakt man also das eine Halteteil in die Sitzschiene ein, setzt dann den zu montierenden Gegenstand samt dem daran fest angebrachten zweiten Halteteil mit den Fußabschnitten in die Sitzschiene ein, verschiebt den Gegenstand und verbindet dann den Gegenstand mit dem zuerst eingesetzten Halteteil.

Vorzugsweise weist jedes der Halteteile zwei oder mehr Fußabschnitte auf. Dadurch ist zum einen eine erhöhte Festigkeit im montierten Zustand gegeben, zum anderen sitzt auch schon während der Montage das nicht mit dem Gegenstand fest verbundene Halteteil sicher und ohne zu wackeln in der Bodenschiene (im Gegensatz zu Hammerkopfschrauben), so daß der zu haltende Gegenstand z.B. durch Schraubbolzen leicht befestigt werden kann. Vorzugsweise sind die Fußabschnitte eines jeden Halteteils miteinander durch eine Basis verbunden, wodurch eine erhöhte Festigkeit sichergestellt wird. Die Basis weist hierbei vorzugsweise eine derartige Breite auf, daß sie mit nur geringem Spiel in die Schlitze der Sitzschiene paßt. Die Fußabschnitte wiederum weisen vorzugsweise einen Querschnitt entsprechend den Bohrungen der Sitzschiene auf. Dadurch ist sichergestellt, daß eine maximal große Eingriffsfläche zwischen den Oberseiten der Fußabschnitte und entsprechenden Eingriffsflächen an der Oberseite im Innenraum der Sitzschienen sichergestellt ist.

Die an den Oberseiten der Fußabschnitte vorgesehenen Klemmflächen sind vorzugsweise so geformt, daß sie den korrespondierenden Eingriffsflächen an der Oberseite im Innenraum der Sitzschienen entsprechen.

Wenn man die Klemmflächen in Richtung des Verschiebens keilförmig abfallend geneigt ausbildet, so kann man eine gewisse Verspannung erreichen, so daß die Gefahr schlagförmiger Beanspruchung der miteinander in Eingriff gelangenden Flächen bei Wechselbelastungen verringert wird.

Die Fußabschnitte sind weiterhin vorzugsweise mit Anschlagflächen versehen, die beim Verschieben mit dem Rand der Bohrung in Anschlag gelangen. Dadurch wird die Montage weiter vereinfacht.

Die Fußabschnitte und (falls vorgesehen) das Basisteil sind mit einer Tragplatte verbunden, die eine Auflagefläche aufweist, welche einer Auflagefläche der Sitzschienen entsprechend dimensioniert ist. Dadurch wird verhindert, daß neben den Sitzschienen verlegter Teppichboden beschädigt wird.

Die Fußabschnitte und ggf. das Basisteil können mit der Tragplatte einstückig verbunden sein. Diese Ausführungsform bietet eine besonders gute Handhabbarkeit bei gleichzeitig niedrigen Herstellungskosten.

Bei einer anderen bevorzugten Ausführungsform der Verbindung ist die Tragplatte getrennt von den Fußabschnitten (samt Basisteil) ausgebildet. Die beiden Körper können dann mittels Schraubbolzen oder dergleichen gegeneinander unter Einzwängen der Sitzschiene verspannt werden. Diese Verbindung ist besonders sicher. Die Montage (und die Sicherheit) kann dadurch weiter erhöht werden, daß man die Fußabschnitte (und ggf. dazu das Basisteil) derart formschlüssig mit der Tragplatte verbindet, daß ein Spannen möglich, aber in einer anderen Richtung kein Verschieben möglich ist.

Bei einer weiteren bevorzugten Ausführungsform sind Klemmeinrichtungen vorgesehen, um wenigstens eines der Halteteile (nämlich das nicht mit dem zweiten Gegenstand verbundene) nach dem Verschieben (Einhaken) in der verschobenen Position gegenüber den Sitzschienen zu fixieren. Dadurch kann sichergestellt werden, daß die verschobene Position des in die Sitzschiene eingehakten Halteteils auch bei rauher Handhabung während der Montage beibehalten bleibt.

Vorzugsweise sind die Halteteile mit dem zu haltenden Gegenstand über Schraubbolzen verbunden. Hierzu ist vorzugsweise jeder Fußabschnitt mit einer Gewindebohrung versehen, in welche der Schraubbolzen zum Festschrauben des Gegenstands auf dem Halteteil einschraubbar ist. Nachdem der Fußabschnitt im Bereich der Bohrung der Sitzschiene angeordnet ist, weist er einen relativ großen Durchmesser auf. Dadurch kann man Schraubbolzen mit relativ großem Durchmesser verwenden.

Bevorzugte Ausführungsformen der Erfindung ergeben sich aus den Unteransprüchen und der nachfolgenden Beschreibung von Ausführungsbeispielen, die anhand von Abbildungen näher erläutert werden.

Hierbei zeigen
- Figur 1: einen Querschnitt durch eine Sitzschiene,
- Figur 2: eine Draufsicht auf die Sitzschiene nach Figur 1,
- Figur 3: eine teilgeschnittene Seitenansicht einer ersten Ausführungsform der Befestigungseinrichtung,
- Figur 4: einen Schnitt entlang der Linie IV-IV aus Figur 3,
- Figur 5: eine Ansicht entlang der Linie V-V aus Figur 3,
- Figur 6: eine zweite bevorzugte Ausführungsform der Erfindung in einer Ansicht der in Figur 3,
- Figur 7: einen Schnitt entlang der Linie VII-VII aus Figur 6,
- Figur 8: eine perspektivische Ansicht eines Einsatzes, der in der Ausführungsform nach Figur 6 Verwendung findet,
- Figur 9: eine Seitenansicht einer weiteren Ausführungsform der Erfindung in einer Darstellung ähnlich der nach den Figuren 3 oder 6,
- Figur 10: eine Draufsicht auf eine Tragplatte, wie sie bei der Ausführungsform gemäß Figur 9 Verwendung findet, und
- Figur 11: einen Schnitt entlang der Linie XI-XI aus Figur 10.

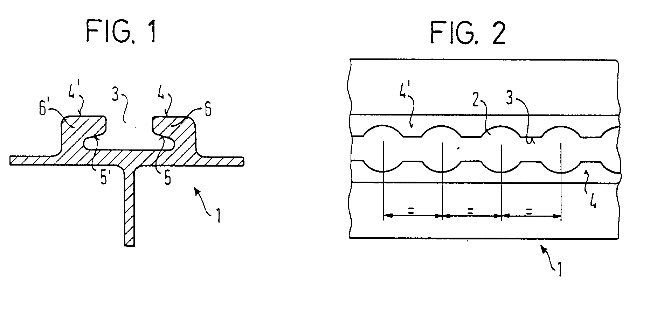

Die in Flugzeugen verwendeten Schienen zum Befestigen der Passagiersitze sind genormt. Auf einem T-förmigen Schienenteil sitzt eine C-schienenartige Anordnung, deren Öffnung zwischen zwei nach innen ragenden Schenkeln 6, 6' abwechselnd aus Bohrungen 2 und Schlitzen 3 besteht. Auf der Oberseite der Sitzschiene 1 sind somit Auflageflächen 4, 4' gebildet, auf denen das Gewicht der Passagiersitze oder in den Sitzschienen zu befestigender anderer Gegenstände liegt. Auf der Unterseite der Schenkel 6, 6' sind Eingriffsflächen 5, 5' gebildet, so daß man zum Befestigen der Sitze Schrauben mit einem hammerförmigen Kopf einsetzen kann. Diese Schrauben weisen ein Gewinde auf, dessen Durchmesser im wesentlichen demjenigen der Bohrungen 2 entspricht. Von diesem Gewindeschaft aus erstrecken sich nach beiden Seiten Schenkel mit einer Breite, die unterhalb der Breite der Schlitze 3 liegt. Die Länge der Schenkel ist derart bemessen, daß beim Anziehen der Schraube und dadurch Drehen des Schraubenschaftes der Kopf gerade ins Innere der Sitzschiene 1 paßt und an seiner Oberseite mit den Eingriffsflächen 5, 5' in Eingriff kommt. Diese Eingriffsflächen 5, 5' sind wie in Figur 1 dargestellt nach innen geneigt, wodurch eine hohe Stabilität der Anordnung gegen Ausreißen gewährleistet ist.

Die im folgenden beschriebenen Ausführungsformen der Befestigungseinrichtung sind dazu geeignet, Gegenstände in diesen Sitzschienen auf einfache Weise zu befestigen.

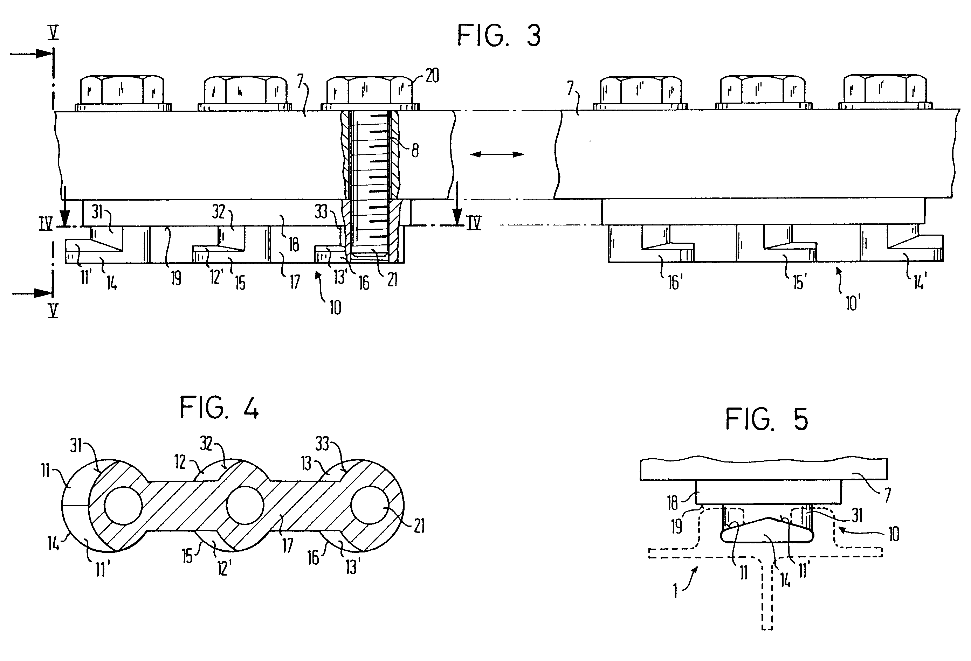

Bei der in den Figuren 3-5 gezeigten Ausführungsform der Erfindung soll ein Gegenstand 7, der aus Gründen der besseren Darstellbarkeit nicht in seiner vollen Länge und Ausbildung gezeigt ist, an der Sitzschiene 1 befestigt werden. Der Gegenstand 7 kann z.B. ein Riegelelement mit Haken zum Halten eines Containers sein.

Die Befestigungseinrichtung umfaßt zu diesem Zweck ein erstes Halteteil 10 und ein zweites Halteteil 10'. Das Halteteil 10' bleibt vorzugsweise fest am zu haltenden Gegenstand 7 montiert.

Jedes der Halteteile 10, 10' weist einen vordersten Fußabschnitt 14, einen mittleren Fußabschnitt 15 und einen hinteren Fußabschnitt 16 auf. Diese Fußabschnitte 14-16 sind durch eine Basis 17 verbunden und gehen - nach oben - in eine Tragplatte 18 zusammen mit dem Basisabschnitt 17 einstückig über. Die Tragplatte 18 ist hierbei in ihrer Breite korrespondierend zu den Auflageflächen 4, 4' ausgebildet, schließt also mit diesen ab. Die Dicke des Basisteils 17 entspricht der Breite der Schlitze 3 in der Sitzschiene. Die Fußabschnitte 14-16 weisen einen Durchmesser auf, der demjenigen der Bohrungen 2 in der Sitzschiene 1 entspricht. Die Abstände zwischen den Fußabschnitten 14-16 entsprechen dem Rastermaß der Bohrungen 2 in der Sitzschiene 1. Auf diese Weise kann man die Fußabschnitte 14-16 zusammen mit der sie verbindenden Basis 17 in die Sitzschiene 1 einsetzen.

Weiterhin weisen die Fußabschnitte 14-16 Anschlagflächen 31, 32, 33 auf, die einen den Bohrungen 2 in der Sitzschiene 1 angepaßten Krümmungsradius haben. Die Mittelpunkte der Krümmungsradien liegen jedoch versetzt zu den Mittelpunkten der Krümmungsradien der eingangs erwähnten untersten Abschnitte der Fußabschnitte 14-16, wie dies aus Figur 4 leicht ersichtlich ist. Dadurch sind nach oben gewandte Klemmflächen 11-13 gebildet. Diese Klemmflächen 11-13 wiederum sind - wie aus Figur 5 ersichtlich - entsprechend den Neigungen der Eingriffsflächen 5, 5' in der Sitzschiene abgeschrägt.

Durch die Tragplatte 18 hindurch sind in die Fußabschnitte 14-16 Gewindebohrungen 21 eingebracht. Die Mittelpunkte der Gewindebohrungen liegen - bezogen auf das in Figur 4 gezeigte Teil - nach rechts verschoben zu den Mittelpunkten der Krümmungsradien der Fußabschnitte 14-16 und nach links verschoben zu den Mittelpunkten der Krümmungsradien der Anschlagflächen 31-33.

Zum Befestigen eines Gegenstands 7 setzt man nun ein erstes Halteteil 10 und ein zweites Halteteil 10' in die Sitzschiene 1 und verschiebt das linke Halteteil 10 nach links, das rechte Halteteil 10' nach rechts, bis die Anschlagflächen 31, 32, 33 mit den Rändern der Bohrungen 2 in Kontakt gelangen. Dann setzt man den Gegenstand 7 auf die Halteteile 10, 10' auf und steckt Schraubenbolzen 20 (vorzugsweise selbstsichernde Schrauben) durch Bohrungen 8, die im Gegenstand 7 entsprechend dem durch die Sitzschiene 1 (bzw. deren Bohrungen 2) vorgegebenen Rastermaß angebracht sind. Nach Festziehen der Schraubverbindungen können sich die Halteteile 10, 10' nicht mehr aufeinander zubewegen, so daß ein Herausschlüpfen der Fußabschnitte 14-16 bzw. ein Außereingriffkommen der Klemmflächen 11-13 mit den Eingriffsflächen 5, 5' der Sitzschiene 1 nicht mehr möglich ist.

Zur Demontage genügt es, wenn die zu einem Halteteil 10' gehörigen Schraubbolzen 20 gelöst werden. Das andere Halteteil 10 kann am zu befestigenden Gegenstand 7 verbleiben.

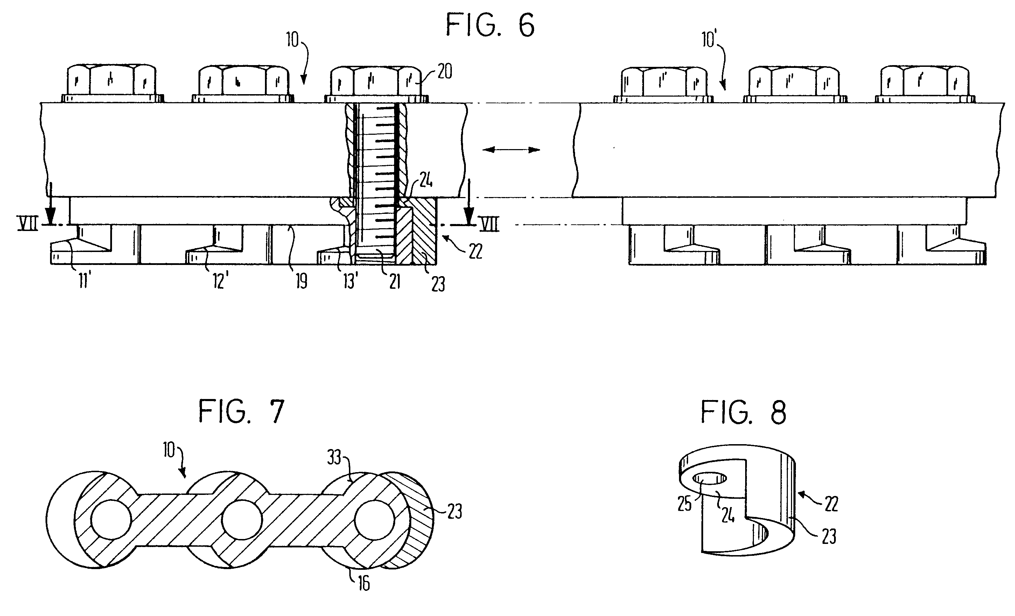

Die in Figur 6 gezeigte Ausführungsform der Erfindung unterscheidet sich von der nach Figur 3 zum einen dadurch, daß die Klemmflächen 11-13 zusätzlich zu der durch die Eingriffsflächen 5, 5' vorgegebenen Neigung noch derart abgeflacht sind, daß beim "Einhaken" der Halteteile 10, 10' in die Sitzschienen 1 eine Klemmwirkung erzielt wird. Nachdem die Sitzschienen 1 mit sehr geringer Toleranz gefertigt sind, ist die in Figur 6 gezeigte Neigung aus Gründen der besseren Darstellbarkeit unnatürlich groß gezeichnet. Durch diese "Keilwirkung" wird erreicht, daß die Tragplatte 18 mit ihrer Auflagefläche 19 fest auf die Auflagefläche 4, 4' der Sitzschiene 1 gepreßt wird.

Die in den Figuren 6-8 gezeigte Variante sieht auch vor, daß man bei einem Halteteil 10, nämlich demjenigen, das vom zu befestigenden Gegenstand 7 beim Demontieren gelöst werden muß, einen Einsatz 22 anbringt, welcher die in Figur 8 perspektivisch gezeigte Form aufweist. Der Einsatz 22 weist einen im Querschnitt sichelförmigen Abschnitt 23 auf, dessen Außen-Umfangsmantel zusammen mit der Anschlagfläche 33 des hintersten Fußabschnitts 16 einen Zylinder ergibt.

Der Klemmabschnitt 23 geht in einen Halteabschnitt 24 mit vollkreisförmigem Querschnitt über, in welchem sich eine Bohrung 25 befindet. Dieser Halteabschnitt 24 ist in eine entsprechende Ausnehmung des Halteteils 10 eingesetzt, wobei die Bohrung 25 mit der Gewindebohrung 21 im Halteteil 10 fluchtet.

Wenn man bei dieser Ausführungsform der Erfindung das (immer zu lösende) Halteteil 10 in einer Sitzschiene montiert, so wird nach dem Verschieben (Einhaken) des Halteteils der Einsatz 22 so eingesetzt, daß sein Klemmabschnitt 23 die Bohrung 2 hinter dem letzten Fußabschnitt 16 vollständig ausfüllt. Dadurch ist ein Zurückwandern des Halteteils 10 während der Montage des Gegenstands 7 nicht mehr möglich. Die anderen Montage-Arbeitsgänge erfolgen wie oben bereits erläutert.

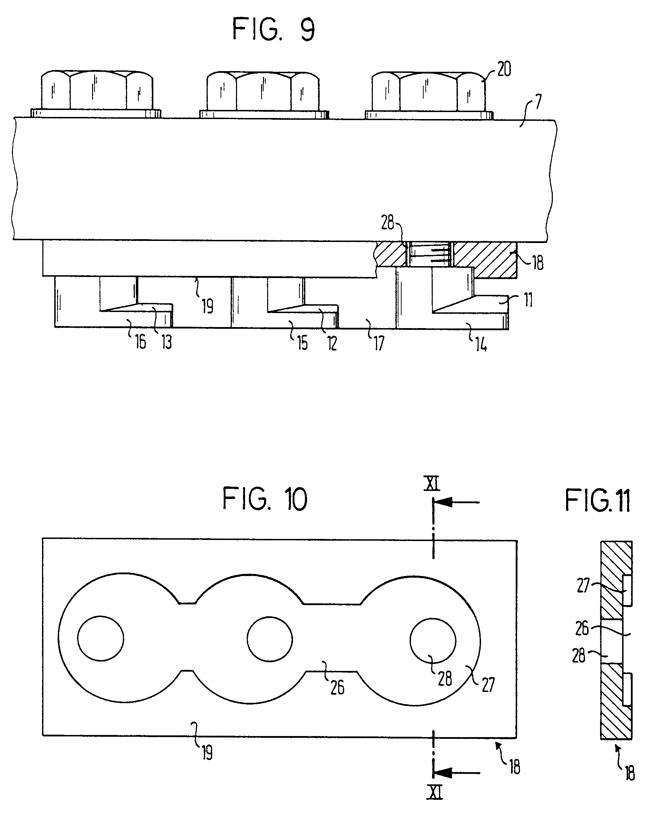

Bei der in den Figuren 9-11 gezeigten Ausführungsform ist die Tragplatte 18 separat ausgebildet. Sie weist Einfräsungen mit Kreisabschnitten 27 und Schlitzabschnitten 26 auf, die (wieder) dem Rastermaß der Bohrungen 2 der Sitzschiene 1 bzw. den Anschlagsflächen 31-33 und dem Basisteil 17 entsprechen. Weiterhin sind Durchgangslöcher 28 in der Tragplatte 19 an Stellen vorgesehen, welche den Gewindebohrungen 21 entsprechen. Dadurch ist bei eingesetzten Bolzen 20 ein Formschluß zwischen den beiden das Halteteil 10 bildenden Materialstücken gewährleistet.

Diese Ausführungsform der Erfindung hat gegenüber den zuvor gezeigten Ausführungsformen der Erfindung den Vorteil, daß die Tragplatte 18 beim Festspannen der Schraubbolzen 20 mit ihrer Auflagefläche 19 auf die Auflagefläche 4, 4' der Sitzschiene gespannt wird. Ein weiterer Vorteil dieser Ausführungsform liegt in der leichteren Herstellbarkeit, da die Fußabschnitte 14-16 bzw. deren Klemmflächen 11-13 keine Hinterschneidung mit der Tragplatte 18 bilden, so daß bei Herstellung durch Formguß lediglich eine zweiteilige Form (gegenüber einer vierteiligen Form für die zuvor beschriebenen Ausführungsformen) benötigt wird.

Die in den Abbildungen beschriebenen Einzelmerkmale der Ausführungsformen lassen sich in verschiedenster Weise kombinieren. So z.B. ist es möglich, den Einsatz 22 (Figuren 6-8) fest (einstückig) an der Tragplatte 18 bei der Ausführungsform gemäß Figur 9-11 vorzusehen. Der Klemmabschnitt 23 kann sich weiterhin nach unten (in Figur 8) verjüngend ausgebildet sein, so daß man ihn leichter einsetzen kann.

### Bezugszeichenliste

- 1: Sitzschiene
- 2: Bohrungen
- 3: Schlitz
- 4, 4': Auflagefläche
- 5, 5': Eingriffsfläche
- 6, 6': Schenkel
- 7: Gegenstand
- 8: Bohrung
- 10, 10': Halteteil
- 11, 11': Klemmfläche
- 12, 12': Klemmfläche
- 13, 13': Klemmfläche
- 14, 14': 1. Fußabschnitt
- 15, 15': 2. Fußabschnitt
- 16, 16': 3. Fußabschnitt
- 17: Basisteil
- 18: Tragplatte
- 19: Auflagefläche
- 20: Schraubbolzen
- 21: Gewinde
- 22: Einsatz
- 23: Klemmabschnitt
- 24: Halteabschnitt
- 25: Bohrung
- 26: Schlitzabschnitt
- 27: Kreisabschnitt
- 28: Durchgangsloch
- 31-33: Anschlagfläche

## Patentansprüche

1. Befestigungseinrichtung zum lösbaren Befestigen eines Gegenstands (7) in einer Flugzeug-Sitzschiene (1) mit C-Profil, in welcher eine Vielzahl von Bohrungen (2) durch Schlitze (3) miteinander verbunden und regelmäßig beabstandet voneinander vorgesehen ist, umfassend Halteeinrichtungen, die in einem Innenraum der Sitzschiene (1) festsetzbar und mit dem Gegenstand (7) verbindbar sind,
**dadurch gekennzeichnet,**
daß die Halteeinrichtungen mindestens zwei zueinander im wesentlichen spiegelsymmetrisch ausgebildete Halteteile (10, 10') mit jeweils mindestens einem hakenförmigen Fußabschnitt (14, 14'; 15, 15'; 16, 16') umfassen, die in die Bohrungen (2) der Sitzschiene (1) einsetzbar und beim Verschieben in einander entgegengesetzten Richtungen längs der Sitzschiene (1) in dieser einhakbar sind, und daß die Halteteile (10, 10') Schraubeinrichtungen (8, 20) umfassen, über welche sie mit dem Gegenstand (7) in einem festgelegten Abstand voneinander verbindbar sind.

2. Die Befestigungseinrichtung nach Anspruch 1,
dadurch gekennzeichnet, daß an jedem der zwei Halteteile (10, 10') jeweils mehrere Fußabschnitte (14-16) vorgesehen sind.

3. Befestigungseinrichtung nach Anspruch 2,
dadurch gekennzeichnet, daß die Fußabschnitte (14-16) eines jeden Halteteils (10, 10') miteinander durch ein Basisteil (17) verbunden sind.

4. Befestigungseinrichtung nach Anspruch 3,
dadurch gekennzeichnet, daß das Basisteil (17) eine derartige Breite aufweist, daß es in die Schlitze (3) der Sitzschiene mit geringem Spiel paßt.

5. Befestigungseinrichtung nach einem der Ansprüche 3 oder 4, dadurch gekennzeichnet, daß das Basisteil (17) und die Fußabschnitte (14-16) mit ihren Unterseiten eine im wesentlichen ebene Fläche bilden.

6. Befestigungseinrichtung nach einem der vorhergehenden Ansprüche, dadurch gekennzeichnet, daß die Fußabschnitte (14-16) einen Querschnitt entsprechend den Bohrungen (2) der Sitzschiene (1) aufweisen.

7. Befestigungseinrichtung nach einem der vorhergehenden Ansprüche, dadurch gekennzeichnet, daß die Fußabschnitte (15-16) an ihren Oberseiten Klemmflächen (11-13) aufweisen, die im wesentlichen flächig mit Eingriffsflächen (9, 9'), Unterschenkeln (6, 6') der Sitzschiene (1) in Eingriff bringbar sind.

8. Befestigungseinrichtung nach Anspruch 7,
dadurch gekennzeichnet, daß die Klemmflächen (11-13) in Richtung des Verschiebens keilförmig abfallend geneigt ausgebildet sind.

9. Befestigungseinrichtung nach einem der vorhergehenden Ansprüche, dadurch gekennzeichnet, daß mindestens ein Fußabschnitt (14-16) eine Anschlagfläche (31-33) aufweist, die beim Verschieben mit einem Rand der Bohrung (2) in Anschlag gelangt.

10. Befestigungseinrichtung nach einem der vorhergehenden Ansprüche, dadurch gekennzeichnet, daß die Fußabschnitte (14-16) und ggf. das Basisteil (17) mit einer Tragplatte (18) verbunden sind, die eine Auflagefläche (19) aufweist, welche einer Auflagefläche (4, 4') der Sitzschiene (1) entsprechend dimensioniert ist.

11. Befestigungseinrichtung nach Anspruch 10,
dadurch gekennzeichnet, daß die Fußabschnitte (14-16) und ggf. das Basisteil (17) mit der Tragplatte (18) einstückig verbunden sind.

12. Befestigungseinrichtung nach Anspruch 10,
dadurch gekennzeichnet, daß die Tragplatte (18) und die Fußabschnitte (14-16) ggf. samt dem Basisteil (17) aufeinander zu mittels Schraubbolzen (20) oder dgl. spannbar sind.

13. Befestigungseinrichtung nach Anspruch 12,
dadurch gekennzeichnet, daß die Fußabschnitte (14-16) und ggf. das Basisteil (17) senkrecht zur Spannrichtung formschlüssig in die Tragplatte (18) eingesetzt sind.

14. Befestigungseinrichtung nach einem der vorhergehenden Ansprüche, dadurch gekennzeichnet, daß Klemmeinrichtungen (23) vorgesehen sind, um wenigstens eines der Halteteile (10, 10') nach dem Verschieben in der verschobenen Position gegenüber der Sitzschiene (1) zu fixieren.

15. Befestigungseinrichtung nach einem der vorhergehenden Ansprüche, dadurch gekennzeichnet, daß jeder Fußabschnitt (14-16) eine Gewindebohrung (21) aufweist, in welche ein Schraubbolzen (20) zum Festschrauben des Gegenstands (7) auf dem Halteteil (10, 10') einschraubbar ist.

16. Befestigungseinrichtung nach einem der vorhergehenden Ansprüche, dadurch gekennzeichnet, daß ein Halteteil (10') mit dem Gegenstand (7) fest verbindbar und das andere Halteteil (10) zum Abnehmen des Gegenstande (7) aus der Sitzschiene (1) vom Gegenstand (7) lösbar ist.
